# FASCICULE DE BREVET EUROPEEN

(11) **EP 4 054 346 B1**
(45) Date de publication et mention de la délivrance du brevet: **03.01.2024**
(21) Numéro de dépôt: 20816290.9
(22) Date de dépôt: 09.11.2020
(51) Int. Cl.: A23K 20/105, A23K 20/147, A23K 20/158, A23K 20/163, A23K 20/24, A23K 20/28, A23K 40/30, A23K 50/80

(54) **ALIMENT OU COMPLÉMENT ALIMENTAIRE POUR ANIMAUX D'ÉLEVAGE**
FUTTER- ODER FUTTERZUSATZ FÜR NUTZVIEH
FEED OR FEED SUPPLEMENT FOR LIVESTOCK ANIMALS

(30) Priorité: 07.11.2019 FR 1912528
(43) Date de publication de la demande: 14.09.2022
(73) Titulaire: Huddle Corp, 44300 Nantes (FR)
(72) Inventeur: EL HARRAK, Abdeslam, 57380 Faulquemont (FR); CRETEL, César Adrien Claud, René, 92600 Asnieres (FR)
(74) Mandataire: Regimbeau
(86) Numéro de dépôt international: PCT/FR2020/052040
(87) Numéro de publication internationale: WO 2021/089969

(56) Documents cités:
- EP-B1- 1 696 736
- WO-A1-2008/037578
- US-A1- 2005 158 396
- US-A1- 2006 292 280
- US-A1- 2011 052 680
- US-A1- 2011 117 180
- US-A1- 2013 202 740
- US-A1- 2018 325 827
- US-A1- 2019 254 302

## Description

### Domaine de l'invention

L'invention a pour objet un aliment ou un complément alimentaire pour animaux d'élevage monogastriques, notamment des poissons. En particulier, l'invention concerne des aliments ou compléments alimentaires permettant une libération contrôlée des substances actives qu'ils comportent.

### État de la technique

Il est bien connu d'utiliser des substances physiologiquement actives pour compléter la nourriture d'animaux d'élevage pour améliorer l'équilibre nutritif des animaux, leur permettant d'accélérer leur croissance, et d'être plus robustes face aux risques sanitaires de l'élevage.

De telles substances physiologiquement actives peuvent être des protéines, des lipides, des glucides, mais également des vitamines et toute forme de supplémentation alimentaire visant les prébiotiques, probiotiques, acides aminés, antioxydants, ou autre molécules (i.e. huiles essentielles) à visée nutraceutique ou thérapeutique directe ou indirecte.

La diversité des conditions dans lesquelles les aliments sont ingérés et digérés nécessite une réponse adaptée à chaque espèce et à chaque stade de maturité des animaux.

Le document EP 1 696 736 B1 divulgue un produit d'enrichissement pour organismes aquatiques tels des Artémia ou de rotifères qui sont eux-mêmes utilisés comme nourriture pour des poissons au stade larvaire. Ce produit d'enrichissement a pour objectif d'augmenter dans les organismes aquatiques cibles le niveau d'acides gras notamment de types DHA et EPA. Il comprend une phase lipidique dispersée dans un gel aqueux de telle sorte que ce gel est soluble dans l'eau distillée à 20°C. Ce produit permet de libérer progressivement des globules de lipides stables lorsqu'il est plongé dans de l'eau. Les globules de lipides contiennent des produits actifs notamment des acides gras spécifiques. Ce produit d'enrichissement ne peut ainsi comporter que des produits liposolubles et non des produits hydrosolubles.

L'intérêt demeure donc pour des aliments ou des compléments alimentaires, intégrant une diversité importante de nutriments (protéines, lipides, vitamines, prébiotiques, probiotiques, etc...) dont les structures et les procédés de fabrication permettent de proposer une réponse adaptée à chaque espèce et à chaque stade de maturité des animaux.

En particulier, pour un aliment adapté à la nourriture et la croissance de poissons au stade larvaire qui comporte l'ensemble des substances actives et nutriments hydrosolubles et liposolubles nécessaires.

### Description brève de l'invention

L'invention a pour objet les produits et procédés suivants décrits dans les revendicat-ions, et en particulier :
- un aliment ou complément alimentaire, sous forme d'objets O à empilements modulaires permettant une libération contrôlée de substances nutritives et/ou physiologiquement actives pour animaux, comprenant un noyau 12 avec une phase lipidique L comportant des substances nutritives et/ou physiologiquement actives liposolubles, ladite phase lipidique L étant sous forme de particules 16 dispersées dans une matrice aqueuse 18 gélifiée, **caractérisé en ce que** ladite phase aqueuse 18 gélifiée est stable dans un milieu aqueux, **en ce que** ladite phase aqueuse 18 gélifiée comporte des substances nutritives et/ou physiologiquement actives hydrosolubles, **en ce que** ledit produit comporte un enrobage 14 du noyau 12, **en ce que** ladite phase aqueuse 18 gélifiée comporte une charge minérale exfoliée de surface spécifique supérieure à 100 m²/g, et **en ce que**
l'interface entre les particules lipidiques 16 et la phase aqueuse 18 comporte des agents de surface choisis dans le groupe des microparticules minérales, des nanoparticules minérales, des microfibres organiques, des nanofibres organiques et leurs combinaisons.

L'aliment ou complément alimentaire se présente ainsi sous la forme d'objets O à empilement modulaires. Le noyau 12 et son enrobage 14 forment ensemble un produit.

Avantageusement, la phase aqueuse 18 gélifiée comporte au moins un agent de gélification choisi parmi les cations multivalents.

Avantageusement,la phase aqueuse 18 comporte un polysaccharide neutre ou fonctionnalisé avec une fonction choisie dans le groupe des fonctions carboxylique, sulfonate, alcoolate ou phosphate, et de préférence la fonction carboxylique, avec une teneur comprise entre 1 et 8 % en poids, de préférence entre 1 et 5,5 % en poids, notamment entre 1 et 4% en poids, par rapport au poids total d'un extrait sec de la phase aqueuse 18.

Avantageusement ladite phase aqueuse 18 est gélifiée par réaction dudit polysaccharide neutre ou fonctionnalisé avec lesdits cations multivalents en présence de pyrophosphate ou deltagluconolactone, par libération de protons acides par hydrolyse aqueuse.

Avantageusement la teneur de la phase lipidique L dispersée dans la phase aqueuse 18 est comprise entre 5 et 50 % en volume, et de préférence comprise entre 10 et 30 % en volume par rapport au volume total de ladite phase aqueuse 18.

Avantageusement les cations multivalents sont choisis dans le groupe des cations calcium, magnésium, zinc, manganèse, fer, aluminium et leurs combinaisons.

Avantageusement le cation multivalent est un sel de calcium choisi dans le groupe des carbonate, sulfate, lactate, citrate, tartrate, caséinate et stéarate.

Avantageusement ladite charge minérale exfoliée est un phyllosilicate et préférentiellement une smectite.

Avantageusement lesdits agents de surface sont des microfibres ou des nanofibres de cellulose ou de chitine.

Avantageusement lesdits agents de surface ont une teneur comprise entre 0,1 et 4 % en poids et préférentiellement entre 0,3 et 2 % en poids par rapport au poids des particules lipidiques 16.

Avantageusement ledit noyau 12 comporte en surface des charges libres, dans lequel ledit enrobage 14 dudit noyau 12 comporte n couches C de matériaux biocompatibles avec un système digestif chargés électrostatiquement alternativement positivement et négativement pour former des coacervats en empilement de couches, et dans lequel n est au moins égal à 1.

Avantageusement le noyau 12 comporte en surface des charges libres, et dans lequel l'enrobage 14 du noyau 12 comporte n couches C de matériaux biocompatibles avec un empilement alterné de charges électrostatiques positives et négatives qui forment des coacervats réticulés et structurés en empilement de couches, n étant au moins égal à 2 et les n couches C comprenant au moins une couche C+ comprenant un matériau biocompatible M+ à charges électrostatiques positives et un agent de réticulation R-choisi parmi les anions multichargés, et au moins une couche C- comprenant un matériau biocompatible M- à charges électrostatiques négatives et un agent de réticulation R+ choisi parmi les cations multivalents.

Avantageusement les matériaux biocompatibles avec un système digestif M+ et M-sont des biopolymères chargés.

Avantageusement le noyau 12 comporte un polymère chargé, ou des protéines avec des charges de surface ou des tensioactifs cationiques, anioniques ou zwitterioniques.

Avantageusement la taille dudit produit, à savoir de l'aliment ou complément alimentaire, est inférieure à 1 mm et de préférence comprise entre 10 et 600 micromètres.

Avantageusement la taille desdites particules lipidiques 16 est comprise entre 1 et 100 micromètres, avantageusement entre 1 et 20 micromètres et notamment entre 1 et 20 micromètres.

L'invention concerne également un procédé de préparation d'un aliment ou d'un complément alimentaire selon l'un quelconque des revendications, comportant les étapes suivantes :
(a) préparer une première émulsion huile dans eau stabilisée par des nanoparticules ou des microparticules pour obtenir lesdites particules lipidiques (16) ;
(b) préparer une phase aqueuse comportant les substances actives hydrosolubles, et les réactifs de gélification, ajouter dans cette phase aqueuse la première émulsion huile dans eau et homogénéiser l'ensemble pour obtenir une phase aqueuse (18) gélifiable comportant une phase lipidique L stabilisée et dispersée ;
(c) ajouter ladite phase aqueuse en cours de gélification dans une phase huileuse et cisailler fortement l'ensemble pour obtenir une deuxième émulsion des particules aqueuses (18) qui finiront de réticuler et de se solidifier dans l'huile ;
(d) séparer les particules aqueuses (18) gélifiées de la phase huileuse pour obtenir les noyaux (12) ; et
(e) former l'enrobage (14) desdits noyaux (12).

L'invention concerne également un procédé de préparation d'un aliment ou d'un complément alimentaire l'un revendications, comportant les étapes suivantes :
(a) préparer une première émulsion huile dans eau stabilisée par des nanoparticules ou des microparticules pour obtenir lesdites particules lipidiques L (16) ;
(b) préparer une phase aqueuse comportant les substances actives hydrosolubles, et les réactifs de gélification, ajouter dans cette phase aqueuse la première émulsion huile dans eau et homogénéiser l'ensemble pour obtenir une phase aqueuse (18) gélifiable comportant une phase lipidique L stabilisée et dispersée ;
(b') laisser reposer ladite phase aqueuse pour obtenir une phase aqueuse (18) gélifiée ;
(c') introduire ladite phase aqueuse (18) gélifiée dans un mixeur éventuellement avec un volume d'eau intégrant des agents osmotiques, ledit volume d'eau étant avantageusement inférieur à 5 fois le volume de ladite phase aqueuse (18) gélifiée, et mixer jusqu'à obtenir des noyaux (12) de taille cible ; et
(e) former l'enrobage 14 desdits noyaux (12).

La phase aqueuse 18 gélifiée des produits comprend des substances nutritives ou physiologiquement actives variées dont des polypeptides de très basse masse moléculaire, par exemple des oligopeptides de masse moléculaire inférieure à 500 Da susceptibles de migrer rapidement vers l'extérieur des produits lorsque ces produits sont dispersés dans de l'eau. De même, de toutes petites molécules par exemple d'oxygène sont susceptibles de pénétrer dans les produits et d'oxyder les substances qu'ils comprennent.

Pour s'opposer à ces déplacements l'aliment ou complément alimentaire selon l'un des produits selon l'invention comprend plusieurs éléments.

Le premier est la présence de charges minérales exfoliées, telles que les argiles et en particulier les phyllosilicates, de surface spécifique élevée, supérieure à 100 m²/g et pouvant aller jusqu'à 800 m²/g selon la qualité de leur exfoliation. Ces argiles comportent des silanols (pour les liaisons hydrogène) ou des charges sur leurs surfaces et leurs bords qui vont piéger les petites molécules et former des agrégats moléculaires et ainsi ralentir leur diffusion.

Le deuxième élément est que la phase aqueuse 18 est gélifiée, c'est-à-dire qu'elle comprend un réseau tridimensionnel de longues chaines macromoléculaires réticulées, en conséquence la phase aqueuse 18 est compartimentée en petits volumes à l'échelle des agrégats, c'est-à-dire de l'ordre de 50 nm à 1 µm. Ce réseau réticulé, couplé à l'élément précédent ainsi qu'à l'enrobage 14 du noyau 12 assure une excellente stabilité de la phase aqueuse 18 des produits contre la diffusion des molécules oxydantes depuis l'extérieur, mais surtout permet de mettre sous contrôle les risques de lixiviation des nutriments, surtout en immersion dans de l'eau tout en favorisant le relargage contrôlé des nutriments tout au long du tube digestif.

Avantageusement, la présence d'agents de gélification tels des cations multivalents qui vont aussi se complexer avec plusieurs petites molécules déjà précomplexées avec les feuillets de la charge minérale et ainsi augmenter la taille et/ou le nombre des agrégats moléculaires, renforce encore la stabilité de la phase aqueuse des produits.

Ces procédés de fabrication respectent aussi l'intégrité de l'ensemble des nutriments et substances actives de l'aliment ou du complément alimentaire.

Les compléments alimentaires et aliments selon les produits selon l'invention permettent ainsi de garder intactes les substances actives utiles pour la croissance des espèces cibles. Ces espèces sont ainsi plus robustes face aux risques sanitaires de l'élevage, par exemple dans le cas de poissons à l'état larvaire.

### Description des Figures

L'invention est décrite ci-après à l'aide des figures 1 à 9, données uniquement à titre d'illustration :
- [Fig. 1] présente schématiquement en coupe et sans respect des dimensions respectives un produit selon l'un des objets de l'invention ;
- [Fig. 2] présente schématiquement un mode de réalisation d'un enrobage du noyau du produit de la figure 1 ;
- [Fig. 3] présente un schéma d'un procédé de fabrication du produit de la figure 1 ;
- [Fig. 4] présente l'analyse de la dispersion de particules lipidiques stabilisées avec de la chitine ;
- [Fig. 5] présente un cliché en microscopie optique de particules lipidiques avant dispersion dans une phase aqueuse gélifiée ;
- [Fig. 6] présente des courbes de suivi du comportement rhéologique d'une phase aqueuse gélifiée ;
- [Fig. 7] présente la distribution de taille des noyaux du produit de la figure 1 ;
- [Fig. 8] présente le suivi conductimétrique des ajouts dosés de biopolymères chargés dans l'eau ;
- [Fig. 9] présente l'évolution de la conductivité de particules réticulées, dispersées dans l'eau, en fonction d'ajouts dosés de biopolymères chargés ; et
- [Fig. 10] présente l'évolution de la quantité de protéines relarguées pour des produits avec et sans enrobages.

### Description détaillée de l'invention

On appellera « objet » ou « élément » les différentes parties constitutives des aliments ou compléments alimentaire selon l'invention.

On appellera « produit » les aliments et compléments alimentaires selon l'invention, obtenus par empilement des différents objets.

Par « gel », on entend un matériau principalement constitué de liquide, mais qui a un comportement proche de celui d'un solide grâce à un réseau tridimensionnel enchevêtré au sein du liquide. Ce sont ces enchevêtrements qui donnent aux gels leur structure et leurs propriétés. Le réseau tridimensionnel de solides dilué dans le liquide peut être le résultat de liaisons chimiques ou physiques, ou bien de petits cristaux ou encore d'autres liaisons qui demeurent intactes dans le liquide de dispersion.

Dans le cadre de la présente invention, par le terme « charge minérale exfoliée », on entend une charge minérale ayant subi une exfoliation, c'est-à-dire une séparation plus ou moins complète de ses feuillets individuels. Le procédé d'exfoliation comprend usuellement trois phases :
- (1) Le pré-gonflement des feuillets de phyllosilicate par gonflement dans de l'eau,
- (2) L'adsorption d'une molécule hydrophobe à la surface des particules de phyllosilicates, pour la rendre compatible avec la phase lipidique de dispersion, par exemple de la lécithine, et
- (3) L'apport d'énergie de cisaillement pour séparer les particules de phyllosilicates en solution.

Dans le cadre de la présente invention, la surface spécifique (Ss) appelée aussi « Aire massique » représente la surface de l'objet (As) par unité de masse (M) et on l'exprime généralement en m²/g. La surface spécifique désigne la superficie réelle de la surface accessible d'un objet par opposition à sa surface apparente.

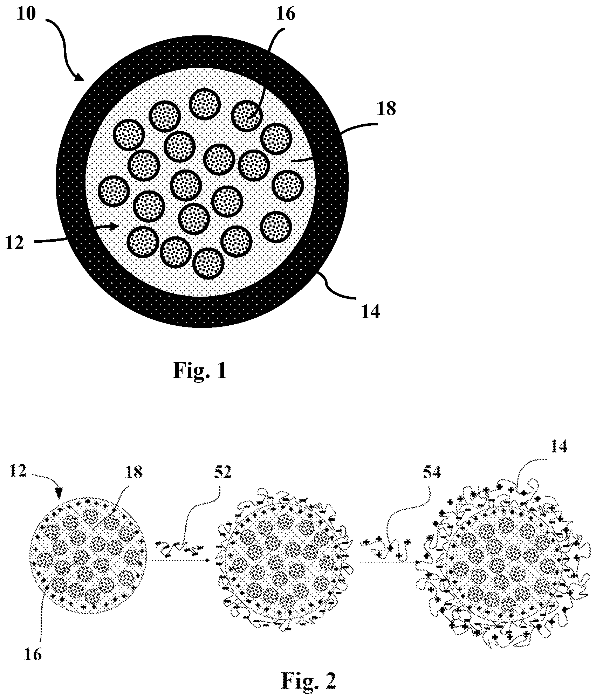

La figure 1 présente schématiquement et en coupe sans aucun respect des dimensions respectives de chaque phase un produit selon l'un des objets de l'invention.

Ce produit 10 comprend un noyau 12 et un enrobage 14 du noyau. Le noyau 12 comprend une phase lipidique L sous forme de particules sphériques stabilisées 16 dispersées dans une matrice aqueuse 18.

Un premier élément ou objet de ce produit 10 est la présence de particules lipidiques 16 dispersées dans la phase ou matrice aqueuse 18.

Selon des modes de réalisation préférentiels, les particules lipidiques 16 sont de forme sensiblement sphérique et de diamètre compris entre 1 et 20 µm.

Les particules lipidiques 16 peuvent avantageusement comporter des vitamines et des antioxydants.

Les particules lipidiques 16 comprennent une ou plusieurs huiles végétales ou animales choisies de préférence parmi les huiles ayant une teneur élevée en oméga 6 et oméga 3. De préférence, ces particules lipidiques 16 comportent une forte teneur en oméga 6 et oméga 3, en particulier de types DHA et EPA. La teneur en oméga 3 est de préférence supérieure à 15 % en poids par rapport au poids de la phase lipidique L, c'est-à-dire des particules lipidiques 16.

Les particules lipidiques 16, et plus précisément les interfaces entre les particules lipidiques 16 et la matrice aqueuse 18 comportent des agents de surface choisis dans le groupe des microparticules minérales, des nanoparticules minérales, des microfibres organiques, des nanofibres organiques et leurs combinaisons. Ces agents de surface permettent de stabiliser la taille des particules lipidiques 16 lors de la préparation des aliments ou compléments alimentaires 10, mais aussi de réduire fortement les migrations de nutriments et substances physiologiquement actives entre les deux phases L et 18.

Selon un mode de réalisation préférentiel, ces agents de surface sont des microparticules ou des nanoparticules dont au moins l'une des dimensions est inférieure à 50 µm, que l'on retrouvera principalement à l'interface entre les deux phases. En effet, ces particules jouent le rôle d'agents de surface stabilisateurs dans les émulsions dites de Pickering.

Ces agents de surface peuvent avantageusement être des microfibres ou des nanofibres de cellulose ou de chitine, avantageusement de chitine, avec une teneur en poids comprise entre 0,1 et 4 % en poids, et préférentiellement entre 0,3 et 2 % en poids par rapport au poids des particules lipidiques 16.

De préférence, les microfibres ou les nanofibres ont un facteur de forme supérieur à 10.

De préférence aussi, les microfibres ont une longueur comprise entre 1 et 50 micromètres et un diamètre compris entre 100 nanomètres et 1 micromètre. À titre d'exemple les microfibres de chitine ont une longueur de l'ordre de 20 µm et un diamètre de 100 nanomètres à 1 µm.

Des nanofibres peuvent aussi être utilisées, à titre d'exemple les nanofibres de chitine utilisées dans l'exemple présentent un facteur de forme de 10 à 40, un diamètre de l'ordre de 10 nanomètres et une longueur de 50 à 300 nanomètres.

Un deuxième élément ou objet du produit 10 est de comporter une phase aqueuse 18 contenant des substances actives hydrosolubles, des agents de gélification, une charge minérale exfoliée de surface spécifique élevée, c'est-à-dire de surface spécifique supérieure à 100 m²/g, et avantageusement des agrégats moléculaires formé avec des cations multivalents.

On utilisera indifféremment les termes « phase aqueuse » et « matrice aqueuse » (18).

Avantageusement, la matrice aqueuse 18 a une forme sensiblement sphérique ou non selon le procédé de fabrication et a un diamètre inférieur à 1 mm et de préférence compris entre 10 et 600 µm.

La gélification de la phase aqueuse 18 permet de limiter la fuite des nutriments et substances actives à l'extérieur lorsqu'elle est plongée dans un milieu aqueux.

Selon un mode de réalisation préférentiel, la phase aqueuse 18 comporte un polysaccharide neutre ou fonctionnalisé avec au moins une fonction choisie parmi les fonctions carboxylique, sulfonate, alcoolate ou phosphate, et de préférence la fonction carboxylique avec une teneur comprise entre 1 et 8 % en poids, de préférence entre 1 et 5,5 % en poids par rapport au poids total d'un extrait sec de la phase aqueuse 18.

Avantageusement, la phase aqueuse 18 est gélifiée (réticulée) par réaction du polysaccharide avec des réactifs tels des cations multivalents en présence de pyrophosphate ou deltagluconolactone, par libération de protons acides par hydrolyse aqueuse.

De préférence, les cations multivalents sont choisis dans le groupe des cations calcium, magnésium, zinc et leurs combinaisons.

Avantageusement, le cation multivalent est un sel de calcium choisi dans le groupe des carbonate, sulfate, lactate, citrate, tartrate, caséinate et stéarate.

Selon un mode de réalisation préférentiel, l'émulsion des particules lipidiques 16 dispersées dans la phase aqueuse 18 comporte des protéines spécifiques destinées à modifier les propriétés des interfaces entre les particules lipidiques 16 et la phase aqueuse 18. Ces propriétés peuvent être la perméabilité, les charges électrostatiques de surface, tension de surface, fonctions chimiques, rugosité...

La masse moléculaire et le pKi de ces protéines peuvent être des critères de choix. A titre d'exemple, on peut utiliser des protéines BSA (Bovine Sérum Albumine) dont la masse moléculaire est de l'ordre de 66 kDa et le pKi de 5,2 ; on peut aussi utiliser des protéines lysozyme de masse moléculaire de l'ordre de 14 kDa et de pKi égal à 11,35. Ces protéines sont ajoutées à la phase aqueuse 18 après l'établissement de l'émulsion de Pickering.

La phase aqueuse 18 gélifiée comporte une charge minérale exfoliée de surface spécifique supérieure à 100 m²/g, avantageusement entre 200 et 500 m²/g,

Cette charge minérale peut être choisie dans le groupe des phyllosilicates, et préférentiellement le phyllosilicate est une smectite.

La charge minérale peut avoir une teneur dans la phase aqueuse 18 comprise entre 0,5 et 35 % en poids et de préférence inférieure à 15 % en poids, par rapport au poids total de la phase aqueuse 18 (dans sa formulation complète).

La présence de cette charge minérale dans la matrice aqueuse 18 a plusieurs avantages importants. Tout d'abord, la charge permet de maîtriser la flottabilité des produits 10 lorsqu'ils sont utilisés en aquaculture. Elle renforce aussi la résistance des produits 10 à l'action de l'oxygène en réduisant fortement sa cinétique de diffusion dans le noyau 12 des produits 10 et fait office de barrière physique pour limiter la fuite des petites molécules des nutriments et substances actives. Enfin, la très forte surface développée des feuillets de smectite permet de microstructurer la matrice aqueuse 18 à l'échelle nanométrique ce qui permet de compartimenter et de jouer sur la cinétique de digestibilité de la matrice aqueuse 18 par les interactions entre les feuillets chargés positivement sur les côtés des feuillets et négativement en surface des feuillets avec l'alginate.

De préférence, la teneur de la phase lipidique L dispersée dans la matrice aqueuse 18 est comprise entre 5 et 50 % en volume, et de préférence comprise entre 10 et 30 % en volume, par rapport au volume total du noyau 12.

En-dessous de 5 % en volume, le volume de la phase lipidique L n'est plus suffisant pour introduire de façon aisée les substances actives liposolubles et avoir une bonne homogénéité de composition des noyaux 12 des produits 10.

Au-delà de 50 %, il devient beaucoup plus difficile de conserver une émulsion d'huile dispersée dans la phase aqueuse 18 (risque d'inversion de phase).

La phase aqueuse 18 gélifiée peut comporter des substances actives hydrophiles telles que des protéines, des acides aminés, des vitamines, des prébiotiques, des probiotiques, des antioxydants, et leurs combinaisons.

Avantageusement, la phase aqueuse 18 comporte en outre un agent osmotique.

Cet agent osmotique peut être choisi dans le groupe des sucres, des sels, des polymères hydrosolubles de préférence de masse moléculaire inférieure à 150 kg/mole et de leurs combinaisons.

Un choix préférentiel d'agent osmotique peut être du sorbitol avec une teneur inférieure à 5 % en poids par rapport au poids de la solution aqueuse, c'est-à-dire de la phase aqueuse 18 (dans sa formulation complète) pour ne pas rendre indigeste le produit final. Une teneur entre 0,8 et 1,5 % en poids de sorbitol est optimale. On peut aussi utiliser avantageusement du sel de Guérande qui permet aussi d'apporter des sels minéraux utiles.

Le troisième élément de ce produit 10 est de comporter un enrobage 14 du noyau 12.

Avantageusement, le noyau 12 comporte en surface des charges libres, l'enrobage 14 du noyau 12 comporte n couches C de matériaux biocompatibles M+ et M-avec un système digestif, en particulier de biopolymères, présentant un empilement alterné de charges électrostatiques positives et négatives qui forment des coacervats structurés en empilement de couches, et n est au moins égal à 1.

Cet enrobage 14 peut comporter n couches C de matériaux biocompatibles M+ et M-, notamment de biopolymères, avec un empilement alterné de charges électrostatiques positives et négatives qui forment des coacervats réticulés et structurés en empilement de couches, n étant au moins égal à 2.

La ou les couche(s) C+ comprenant le matériau biocompatible à charges électrostatiques positives M+ comprennent un agent de réticulation R- choisi parmi les anions multichargés.

La ou les couche(s) C- comprenant le matériau biocompatible de charges électrostatiques négatives M- comprennent un agent de réticulation R+ choisi parmi les cations multivalents.

Ainsi, chaque couche C comprend un matériau biocompatible M à charges électrostatiques, c'est-à-dire un matériau biocompatible portant des groupements fonctionnels ionisables et ionisées dans les conditions physico-chimiques adaptées. Ces charges peuvent être des charges électrostatiques positives et alors le matériau biocompatible, noté M+, comprend des groupements fonctionnels cationiques, tels que par exemple des fonctions amines. Ces charges peuvent être des charges électrostatiques négatives et alors le matériau biocompatible, noté M-, comprend des groupements fonctionnels anioniques, tels que par exemple des fonctions acide carboxylique, sulfonate, alcoolate ou phosphate.

Chaque couche C comprend en plus du matériau biocompatible M un agent de réticulation R. Cet agent de réticulation comprend également des charges électrostatiques, de charges opposées à celle du matériau M. Cependant, la charge électrostatique totale de la couche C correspond à celle du matériau M. En effet, dans la couche C, le ratio (nombre de charges électrostatiques du matériau biocompatible, noté nM/ nombre de charges électrostatiques de l'agent de réticulation, noté nR) (soit nM/nR) est strictement supérieur à 1, avantageusement supérieur à 2, plus avantageusement supérieur ou égal à 5.

Ainsi, la couche comprenant le matériau M+, notée couche C+, comprend également un agent de réticulation comprenant des charges négatives, noté R-. La couche C+ est globalement chargée positivement. En effet, dans la couche C+, le ratio (nombre de charges électrostatiques positives du matériau biocompatible, noté nM+/ nombre de charges électrostatiques négatives de l'agent de réticulation nR-) (soit nM+/nR-) est strictement supérieur à 1, avantageusement supérieur à 2, plus avantageusement supérieur ou égal à 5.

Ainsi, la couche comprenant le matériau M-, notée couche C- comprend également un agent de réticulation comprenant des charges positives, noté R+. La couche C- est globalement chargée négativement. En effet, dans la couche C-, le ratio (nombre de charges électrostatiques négatives du matériau biocompatible, noté nM-/ nombre de charges électrostatiques positives de l'agent de réticulation nR+) (soit nM-/nR+) est strictement supérieur à 1, avantageusement supérieur à 2, plus avantageusement supérieur ou égal à 5.

Dans chaque type de couche C, la modulation du ratio nM/nR, soit nM+/nR- ou nM-/nR+, permet de moduler la rigidité de l'enrobage 14. A titre d'exemple, lorsque l'agent de réticulation est ajouté en une teneur permettant d'avoir un ratio nM/nR de 5/1 on obtient un enrobage très rigide et lorsque l'agent de réticulation est ajouté en une teneur permettant d'avoir un ratio nM/nR de 100/1, on obtient un maillage beaucoup plus souple.

Le ratio nM/nR varie avantageusement de 2/1 à 300/1, plus avantageusement de 5/1 à 150/1.

Ce système d'enrobage 14 a l'avantage de faciliter la modulation de l'épaisseur de la couche d'enrobage 14 et le large choix matériaux biocompatibles, en particulier de biopolymères, M+ et M- permet de moduler le maillage de matériaux biocompatibles, en particulier de biopolymères, M+ et M-, à la surface, qui est aussi rigidifié par des réticulations plus ou moins fortes de ce maillage. La modulation de la rigidité de l'enrobage 14 permet de moduler le relargage des substances nutritives et/ou physiologiquement actives : plus la rigidification est dense, plus le maillage de biopolymères est réduit et plus le relargage est ralenti. Ce type d'enrobage 14 réticulé et structuré en multicouches C permet également d'obtenir une stabilité structurelle nécessaire à la conservation de l'aliment 10 jusqu'à sa consommation et la libération de substances nutritives et/ou physiologiquement actives, et notamment nécessaire à sa manipulation.

L'agent de réticulation R+ est choisi parmi les cations multivalents. Avantageusement, les cations multivalents sont choisis dans le groupe des alcalino-terreux, des métaux de transition et des métaux pauvres.

Très avantageusement, les cations multivalents sont choisis dans le groupe des cations de calcium, magnésium, manganèse, fer, cuivre, zinc, aluminium et leurs combinaisons.

Il est à noter que les cations multivalents peuvent être apportés par des sels comprenant alors également un anion. Ce qui importe est que le composé utilisé permette la libération d'un cation qui va pouvoir réagir avec les charges négatives du matériau biocompatible M- et ainsi contribuer à la réticulation de la couche C-.

L'agent de réticulation R- est choisi parmi les anions multichargés. On entend par « anion multichargé » un composé chimique comprenant plusieurs groupements fonctionnels chargés négativement. Le groupement fonctionnel peut être monovalent ou multivalent. Selon un mode de réalisation préférentiel, les anions multichargés sont des polyphosphates. De préférence, l'agent de réticulation R- est choisi parmi le trimétaphosphate de sodium (STMP), l'hexamétaphosphate de sodium et leur mélange, de préférence le trimétaphosphate de sodium (STMP).

Avantageusement, dans chaque couche C+, le matériau biocompatible M+ est un biopolymère, en particulier choisi parmi les polysaccharides chargés positivement, avantageusement choisi parmi les polypeptides, le chitosan, les dérivés de la chitine, gommes utilisées comme agent texturant fonctionnalisés amine tels que la gomme de guar fonctionnalisée, et leurs mélanges. Plus avantageusement, le matériau biocompatible M+ est choisi parmi le chitosan.

Avantageusement, dans chaque couche C+, le biopolymère M+ est le chitosan et l'agent de réticulation R- est avantageusement le trimétaphosphate de sodium (SMTP).

Avantageusement, dans chaque couche C-, le matériau biocompatible M- est un biopolymère, en particulier choisi parmi les polysaccharides chargés négativement, avantageusement choisi parmi les polypeptides, la pectine, la gomme arabique, la xanthane, les alginates, les carraghénanes, les dérivés cellulosiques, et leurs mélanges. Plus avantageusement, le matériau biocompatible M- est choisi parmi les alginates, la pectine et leurs mélanges.

Avantageusement, dans chaque couche C-, le biopolymère M- est choisi parmi les alginates ou la pectine, et l'agent de réticulation R+ est avantageusement choisi parmi les cations calcium.

Avantageusement, dans chaque couche C+, l'agent de réticulation R- est introduit à une teneur spécifique permettant d'obtenir un ratio nM+/nR- compris entre 5/1 et 150/1. En particulier, dans chaque couche C+, l'agent de réticulation R- est introduit à une teneur comprise entre 0,5 g et 2 g pour 1 g de M+ pour les forts taux de réticulation, et entre 15 et 70 mg pour 1g de M+ pour les faibles taux de réticulation.

Avantageusement, dans chaque couche C-, l'agent de réticulation R+ est introduit à une teneur spécifique permettant d'obtenir un ratio nM-/nR+ compris entre 5/1 et 150/1. En particulier, dans chaque couche C-, l'agent de réticulation R+ est introduit à une teneur comprise entre 0,5 g et 2 g pour 1g de M- pour les forts taux de réticulation, et entre 15 à 70 mg pour 1g de M- pour les faibles taux de réticulation.

Avantageusement, les couches C comprennent ainsi des liaisons entre le matériau M et l'agent de réticulation R par complexation métallique pour la couche C- ou pontage chimique pour la couche C+.

De préférence, n est inférieur ou égal à 15, avantageusement compris entre 2 et 15, et de préférence compris entre 2 et 10. n est un nombre entier.

Ce nombre de couches C variable est adapté pour obtenir un bon compromis entre qualité de l'encapsulation et relargage contrôlé dans le tube digestif tout en permettant une mise en oeuvre aisée.

La couche extérieure de cet enrobage 14 est de préférence constituée d'un polymère chargé positivement, c'est-à-dire une couche C+, car cela a des propriétés antibactériennes et ainsi on améliore la conservation de l'aliment ou du complément alimentaire.

La mise en oeuvre de deux chimies de réticulation, complexation métallique et pontage chimique, pour l'enrobage 14 permet d'avoir un déclencheur de libération des nutriments en fonction de l'avancement dans le cycle de digestion. Ainsi, on favorise la digestion des protéines grâce à la libération en milieu acide des ions métalliques multivalents (qui sont complexés avec les donneurs d'électrons) ce qui augmente la perméabilité de l'enrobage 14 à l'acide présent dans l'estomac, tout en retardant le relargage du digesta, car la couche de polycations reste réticulée par les ponts phosphoramides obtenus par l'action du trimétaphosphate de sodium (STMP). Ces derniers points de réticulation sont ensuite libérés par l'action des enzymes phosphatases alcalines secrétés usuellement par le foie et déversés dans le tube digestif par la bile. L'aliment ou le complément alimentaire libère ainsi ses nutriments pré-digérés dans le tube digestif avec une cinétique plus lente, favorisant l'efficacité d'absorption et les voies métaboliques les plus favorables à la performance zootechnique des animaux cibles.

Avantageusement, le noyau 12 comporte également un polymère chargé, ou des protéines avec des charges de surface ou des tensioactifs cationiques, anioniques ou zwitterioniques.

On peut aussi ajouter spécifiquement des biopolymères chargés au noyau 12 pour générer ces charges positives de surface. Ils seront choisis parmi des biopolymères anioniques, ou cationiques cités ci-dessus, c'est-à-dire M+ et M-, mais également parmi les biopolymères combinant les charges positives et négatives tel que dans l'acide hyaluronique. Cela permet de moduler les charges résiduelles ou libres par l'ajustement des conditions de pH du milieu ou par l'équilibre stoechiométrique des systèmes de complexation dans la phase aqueuse 18 gélifiée.

L'enrobage 14 peut aussi comporter au moins une couche de matériaux de renfort MR.

Ces matériaux de renfort MR peuvent être choisis dans le groupe des argiles, des silices et des microfibres minérales ou organiques chargées.

Ces matériaux de renfort présentent une dominante de charges électrostatiques négatives à leurs surfaces et sont ainsi attirées par les charges positives de surface d'un biopolymère cationique M+. On peut ainsi mettre en place une couche de matériaux de renfort MR entre deux couches de biopolymères cationiques C+.

Le principe d'intégrer des matériaux de renfort MR présentant des charges électrostatiques négatives à leur surface reste possible, ils seront positionnés entre deux couches de biopolymères anioniques C-.

Cet enrobage 14 est donc constitué de couches C+ et C- de biopolymères M+ et M-, avantageusement de polysaccharides, et éventuellement de matériaux de renfort MR, chargés alternativement positivement et négativement. Dans l'estomac de l'animal, le pH est acide et c'est le maillage des biopolymères chargés positivement M+ qui est le plus résistant à ce pH acide et qui assure l'intégrité de l'enrobage.

Les couches C- de l'enrobage 14 sont bloquées par des cations tels Ca++. Ces cations sont dissous en milieu acide, donc lorsque l'on arrive en milieu basique (les intestins) on a une véritable libération de l'ensemble des couches C de l'enrobage 14. Dès qu'il y a une brèche dans l'enrobage 14 les enzymes de la bile vont pouvoir pénétrer jusqu'au noyau et entraîner la libération de la phase aqueuse 18 ainsi que de ses nutriments et de ses substances actives, conduisant très rapidement aussi à la libération des particules lipidiques 16 de la phase aqueuse 18 ainsi que de leurs nutriments et substances actives. Cet enrobage 14 assure donc la libération rapide de tous les nutriments et substances actives dans la zone des intestins des animaux monogastriques là où leur absorption sera la plus efficace possible.

Ce produit 10 présente un fort potentiel dans la substitution efficace des proies vivantes dans les écloseries d'espèces marines de poissons, ainsi que pour les nurseries de crevettes. Il présente également un intérêt fort pour la supplémentation des eaux de breuvages des exploitations de monogastriques tels que les élevages aviaires.

La figure 2 illustre la formation de l'enrobage 14 des noyaux 12 par ajouts successifs de biopolymères, avantageusement de polysaccharides, chargés positivement M+ et négativement M-.

À gauche de la figure, on voit un noyau 12 du premier produit 10. Ce noyau 12 comprend des charges libres de surface, de préférence positives.

Ce noyau est dispersé dans une solution aqueuse, à laquelle on va ajouter une solution de biopolymères chargés négativement 52, par exemple des polysaccharides tels que les alginates, les xanthanes, les carboxymethyl celluloses, etc.

Par interactions électrostatiques, le biopolymère chargé négativement va recouvrir la surface du noyau 12 en formant un coacervat, avec un excédent de charges négatives servant de base pour l'étape suivante.

On introduit ensuite dans la dispersion avec le noyau 12 chargé maintenant négativement en surface, une solution de biopolymère, avantageusement de polysaccharide, chargé positivement 54 (M+). Celui-ci va alors recouvrir la couche précédemment disposée.

On renouvelle l'opération en alternant les solutions de biopolymères chargés positivement (M+) et négativement (M-) jusqu'à obtenir un enrobage 14 comportant le nombre n de couches C désiré. Usuellement n est compris entre 2 et 10.

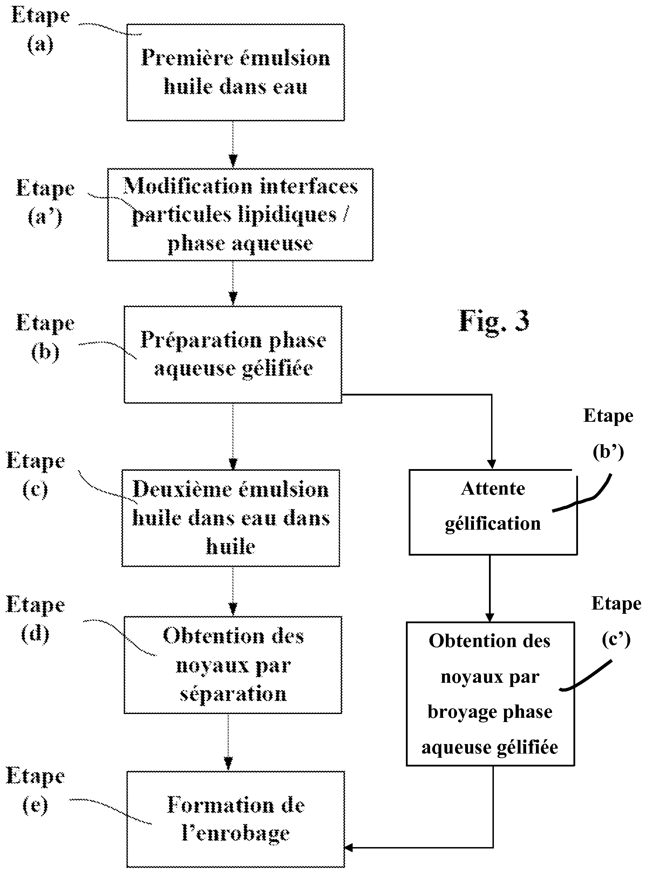

La figure 3 présente les différentes étapes de fabrication du produit 10.

Les noyaux 12 du produit 10 sont préparés à partir d'une double émulsion huile dans eau dans huile. La première émulsion huile dans eau est stabilisée par des agents de surface tels des microparticules ou des nanoparticules puis optionnellement les interfaces entre les particules lipidiques 16 et la matrice aqueuse 18 sont modifiées par l'incorporation dans la phase aqueuse 18 de protéines spécifiques. L'obtention des noyaux 12 est alors obtenue par réalisation de l'émulsion double et stabilisée par gélification de la phase aqueuse. Les particules, c'est-à-dire les noyaux 12, sont récupérées par séparation entre la phase huile et de l'eau de lavage par exemple par centrifugation. On réalise ensuite un enrobage 14. Les agents de surface de stabilisation de la première émulsion sont avantageusement des microfibres de chitine ou de cellulose.

Un exemple de réalisation est maintenant décrit.

À l'étape (a), on prépare dans un flacon une phase aqueuse 18 contenant une concentration de nanofibres de cellulose ou de chitine comprise entre 0,1 % et 0,6 % en poids par rapport au poids total de la phase aqueuse 18. On ajoute dans ce flacon le volume nécessaire d'un mélange d'huile adapté pour avoir une composition avec des taux d'acide docosahexaénoïque (DHA) et d'acide eicosapentaénoïque (EPA) appropriés pour la cible choisie. On a 30 % en volume d'huile et 70 % en volume d'eau.

Les nanofibres de chitine utilisées ont un facteur de forme de 10 à 40, un diamètre de l'ordre de 10 nanomètres et une longueur de 50 à 300 nanomètres.

On homogénéise à l'aide d'un système rotor-stator type Silverson L5M-A, permettant d'obtenir un fort cisaillement à 10 000 rpm (tours par minute), pendant 10 min. On laisse reposer 20 min, puis on homogénéise à nouveau pendant 10 min à la même vitesse.

Les émulsions ont été caractérisées au granulomètre Malvern Mastersizer 3000 avec une dispersion en voie liquide par l'hydro EV, avec le logiciel de détermination de la taille de l'appareil (équation Fraunhofer).

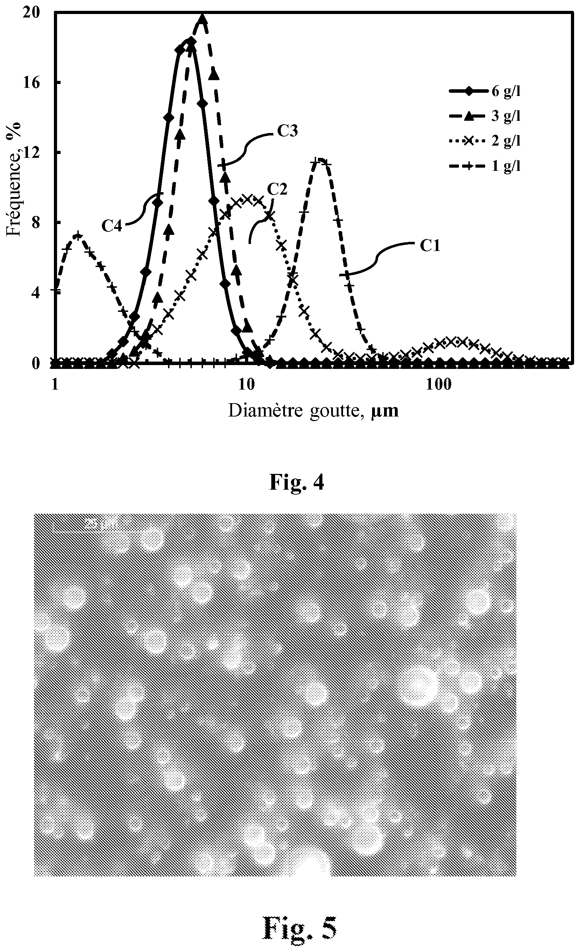

La figure 4 présente les résultats de l'analyse de la taille des particules lipidiques 16 obtenues avec stabilisation avec des microfibres de chitine. La courbe C1 correspond à une concentration de chitine de 0,1 % en poids par rapport au poids de la phase aqueuse 18, la courbe C2 à 0,2 % en poids, la courbe C3 à 0,3 % en poids et la courbe C4 à 0,6 % en poids.

Les particules 16 les plus monodisperses sont obtenues à partir de 0,3 % en poids de chitine en solution, pour un pic de tailles compris entre 5 et 6 µm.

Les tailles moyennes des particules lipidiques 16 obtenues par stabilisation avec de la cellulose sont plus petites, entre 2 et 3 microns, et les émulsions sont stables dès 0,1% en poids d'agent stabilisant.

À l'étape (a') optionnelle, on module la perméabilité des particules lipidiques 16 en incorporant dans la phase aqueuse 18 des protéines spécifiques. En travaillant à pH 7, on utilise des protéines de lysozyme pour des émulsions stabilisées avec des microfibres de cellulose et des protéines BSA (Bovine Sérum Albumine) pour des émulsions stabilisées avec des microfibres de chitine. Cela permet de favoriser les interactions électrostatiques avec les charges négatives de surface de la cellulose, ou positives de la chitine.

La figure 5 montre un cliché obtenu au microscope optique, aucune agrégation n'est observée.

Ces particules peuvent être utilisées pour la fabrication de l'aliment 10.

À l'étape (b), on prépare une phase aqueuse 18 gélifiée (réticulée) comme suit :
Dans un bécher, on disperse 20 % en poids par rapport au poids de la phase aqueuse d'un mélange de protéines correspondant à la cible d'apport en acides aminés dans de l'eau ; on ajoute 2 % en poids d'alginate de sodium ; on ajoute 1 % en poids d'agent osmotique par exemple du sorbitol.

On mélange avec un fouet du type d'un robot Kenwood jusqu'à homogénéisation complète de la solution.

On ajoute l'émulsion préparée à l'étape (a) de façon à apporter 10 % en poids de lipides par rapport au poids de la phase aqueuse 18 ; on ajoute les éléments nutritifs complémentaires (de 2 à 15 % en poids par rapport à la phase aqueuse) ; on homogénéise au fouet pendant 5 à 10 min.

On prépare séparément une dispersion à hauteur de 30 % en poids d'argile (montmorillonite ou bentonite) dans une phase aqueuse contenant 0,5 % en poids de gomme de guar. On ajoute à la phase aqueuse du bécher l'équivalent de 2 % en poids par rapport au poids de la phase aqueuse du bécher de la dispersion d'argile.

On mélange avec le fouet l'ensemble. La solution peut être travaillée pendant 5 à 10 minutes.

On ajoute ensuite simultanément 0,5 % en poids de pyrophosphate et 2 % de sulfate de calcium, puis on mélange avec le fouet l'ensemble pendant 1 à 2 minutes.

La cinétique de solidification de l'aliment a été caractérisée au Rhéomètre ARES-G2 de TA-instrument, avec le mobile cône/plan de 40 mm². Un cisaillement rotatif de 5° a été appliqué à une fréquence de 1 Hz, et l'évolution de la force au cours du temps a été mesurée.

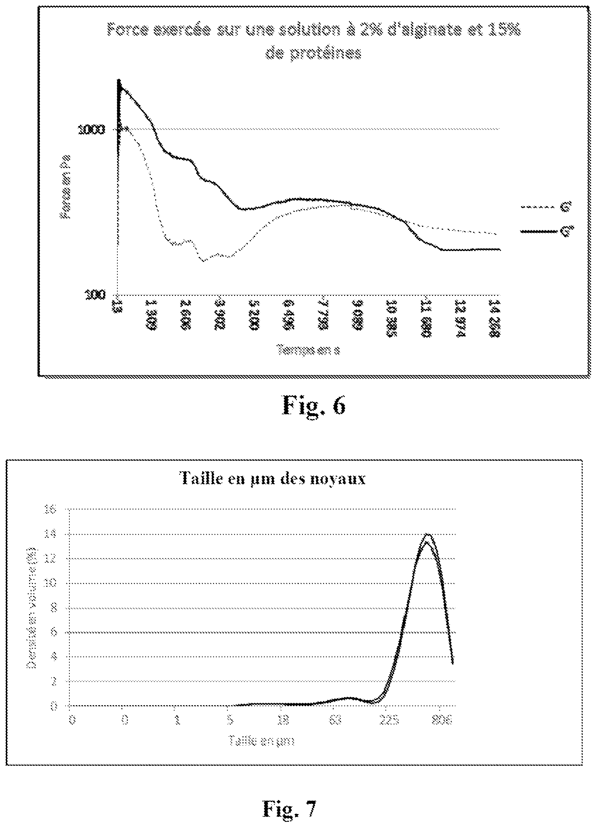

La figure 6 présente des courbes de suivi du comportement rhéologique de la phase aqueuse 18 gélifiée dans le cas d'une phase obtenue avec 2 % en poids d'alginate et 15 % en poids de protéines par rapport au poids total de la phase aqueuse. Cette figure donne l'évolution en fonction du temps des modules G' et G" mesurés.

On observe aux temps d'observation courts une déstructuration du gel polyélectrolyte/protéines, avec une diminution de la force de cisaillement G', marquant plusieurs paliers. Puis une reprise de la force au-delà de 3800 secondes traduisant l'émergence d'un domaine de réticulation percolant entre les deux plaques de cisaillement. Cette réticulation semble saturer à 8300 secondes, puis il y a décrochement probablement lié à la désolidarisation de l'échantillon solidifié avec la paroi du cône/plan.

On en déduit que la mixture peut être travaillée pendant environ une heure sans risquer de détruire le mécanisme de gélification, et avec deux heures de repos consécutifs on atteint le niveau de rigidité maximum.

À l'étape (c), on injecte la phase aqueuse 18 gélifiée obtenue à l'étape (b) dans une phase huileuse, on cisaille fortement l'ensemble pour obtenir une deuxième émulsion des particules aqueuses gélifiées dans l'huile :
Dans un bécher, on verse un volume de phase huileuse, préférentiellement de l'huile de tournesol, correspondant à trois fois le volume de la phase aqueuse 18 gélifiée obtenue à l'étape (b) ; on ajoute la phase aqueuse 18 gélifiée et on mélange la solution dans un mélangeur à fort cisaillement rotor-stator type Mélangeur Silverson, L5M-A pendant 5 min à 2 800 rpm (tours par minute).

On laisse reposer 30 minutes ; on cisaille de nouveau au mélangeur à fort cisaillement pendant 5 minutes et on laisse reposer 120 minutes.

On peut aussi optionnellement obtenir plus rapidement la fin des réactions de réticulation en augmentant la température des particules aqueuses.

A l'étape (d), on obtient les particules aqueuses réticulées, les noyaux 12 des produits 10, que l'on récupère en transférant les particules dans de l'eau de lavage et par séparation de la phase huileuse par exemple par centrifugation :
Dans un grand récipient/réacteur, on verse le mélange précédent, on ajoute un volume d'eau correspondant à deux fois le volume de la phase huileuse. L'eau comporte 1 % en poids d'agent osmotique préférentiellement du sorbitol.

On homogénéise la solution biphasique puis on centrifuge à 1000 g pendant deux minutes. Les noyaux 12 ainsi centrifugés migrent dans la phase aqueuse.

On élimine le surnageant correspondant à l'huile, et le surnageant d'eau de lavage, en conservant les noyaux 12.

On renouvelle cette purification des particules à deux reprises avec de l'eau supplémentée à 1% en sorbitol.

A chaque fois la phase huileuse et le surnageant aqueux sont éliminés.

Enfin, on ajoute les particules décantées dans une phase aqueuse dont le volume est double de celui des particules décantées. L'eau contient 1% de sorbitol et 0.05% de Chitosan (agent de stabilisation anti bactérien).

Les noyaux peuvent être stockées à +4°C.

Les particules sont caractérisées au granulomètre Malvern Mastersizer 3000 avec une dispersion en voie liquide par l'hydro EV, avec le logiciel de détermination de la taille de l'appareil (équation Fraunhofer). La figure 7 présente les résultats obtenus.

La taille moyenne des particules de phase aqueuse, les noyaux, obtenues avec la vitesse de rotation de 2000 rpm est de 480 µm. La taille moyenne peut être réduite en augmentant le taux de cisaillement de la solution, en diminuant la viscosité de la solution d'alginate (phase dispersée) ou en augmentant la viscosité de la phase continue (huile).

Les particules ainsi obtenues peuvent être stockés au frais (4°C), ou utilisées pour l'étape d'enrobage par dépôt de couche de biopolymère couche par couche, en anglais « Layer by Layer ».

Selon une variante de fabrication illustrée à la figure 3, après avoir préparée la phase aqueuse 18 gélifiable (étape (b)), on laisse reposer pour atteindre la gélification complète de la matrice aqueuse 18 (étape (b')), puis on broie la matrice aqueuse 18 dans un mixeur à lame ou blender éventuellement avec un volume d'eau comportant un agent osmotique (sorbitol ou chlorure de sodium) approprié jusqu'à obtenir la taille des noyaux voulue (étape (c')). Le volume d'eau approprié correspond au volume d'eau permettant d'obtenir un équilibre osmotique avec la matrice aqueuse 18 et/ou permettant d'obtenir la taille des noyaux voulue. Le volume d'eau approprié est avantageusement inférieur à 5 fois le volume de ladite phase aqueuse 18.

À l'étape (e), on forme l'enrobage 14 des noyaux 12 par dispersion dans un bain aqueux dans lequel on apportera successivement des solutions de matériaux biocompatibles cationiques M+ et anioniques M- :

Le mode opératoire est décrit pour 100 g de particules aqueuses dispersées dans 300 g d'eau supplémentée de 1 % de sorbitol.

On utilise un mobile d'agitation favorisant une bonne homogénéisation, sans induire un cisaillement excessif de la solution (mobile hélices doubles).

On prépare :
- 2000 ml d'une première solution aqueuse de chitosan (M+) à 0,1 % en poids par rapport au poids de la solution aqueuse (avec 0.05% d'acide acétique) ;
- 2000 ml d'une seconde solution aqueuse d'alginate de sodium (M-) à 0,1 % en poids ;
- 200 ml d'une troisième solution aqueuse de chlorure de calcium (R+) à 2 % en poids ; et
- 200 ml d'une quatrième solution aqueuse de SMTP (R-) à 0,5% en poids.
   - Remarque : le TSTP est obtenu par pontage chimique du SMTP qui est le réactif introduit.

On commence les ajouts par la solution d'alginate de sodium à 0,1 % en poids ; on agite pendant 1 à 2 min entre chaque ajout. On ajoute ensuite la solution de chitosan.

La marche suivie et les proportions de chaque ajout sont alors les suivantes (tous les % sont des % en poids) :
- + 20 ml de solution d'alginate de sodium à 0,1 % ;
- + 20 ml de solution de chitosan à 0,1 % ;
- + 60 ml de solution d'alginate de sodium à 0,1 % ;
- + 20 ml de solution de SMTP à 5 g/l ;
- + 10 ml de solution de chitosan à 0,1 % ;
- + 10 ml de solution de chlorure de calcium à 2 % ;
- + 4,25 g de montmorillonite ;
- + 100 ml de solution de chitosan à 0,1 % ;
- + 80 ml de solution d'alginate de sodium à 0,1 % ;
- + 20 ml de solution de chitosan à 0,1 % ; et
- + 20 ml de solution de chlorure de calcium à 20 %.

On agite pendant 15 min à 370 rpm. Ce mode opératoire permet d'obtenir un enrobage à sept couches dont la première est une couche d'alginate de sodium anionique et la dernière de chitosan cationique. Au milieu de l'enrobage, il y a une couche de feuillets de smectite (montmorillonite) (MR). Ces opérations ont pu être répétées jusqu'à sept fois au laboratoire.

Le suivi conductimétrique de la conductance des solutions permet de suivre le dépôt des biopolymères chargés.

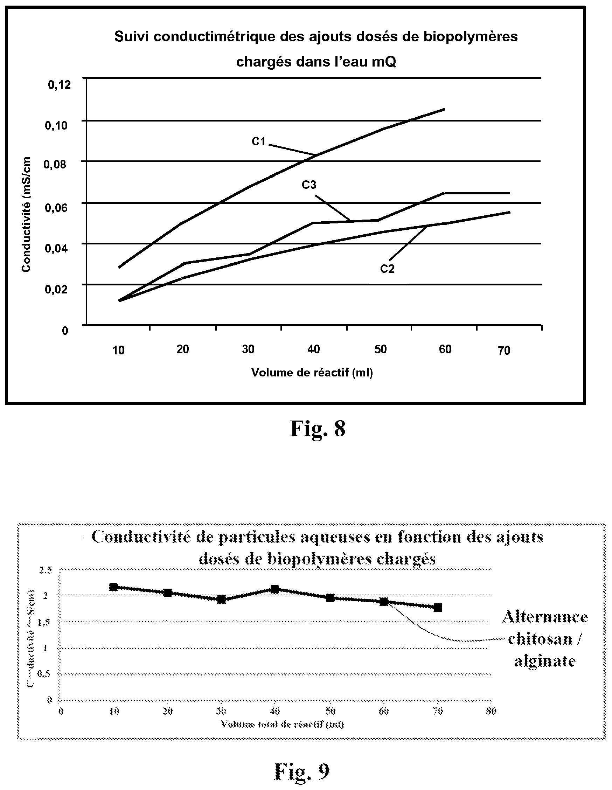

Comme référence, on mesure l'évolution de la conductivité d'une solution d'eau pure, à laquelle on effectue des ajouts dosés de solution de chitosan à 0,1% (courbe C1), puis de façon indépendante des ajouts dosés d'alginate de sodium à 0,1 % (courbe C2), et enfin la combinaison des deux (courbe C3). La figure 8 montre les résultats obtenus.

On caractérise ainsi l'augmentation de la conductivité de la solution lors des ajouts de chitosan et d'alginate de sodium, avec une conductivité plus importante pour l'alginate. La combinaison des deux réactifs se traduit par une augmentation en dents de scie moins rapide de la conductivité comparée à celle des polymères anioniques (M-) et cationiques (M+) seuls, car les charges se neutralisent en grande partie, et le rayon de giration des coacervats devient plus grand (conductivité apparente moins élevée).

La figure 9 montre l'évolution de la conductivité d'une solution de particules aqueuses lors des ajouts dosés de biopolymères chargés. Cette figure montre que l'ajout de biopolymères anioniques (M-) et cationiques (M+) n'induit pas d'augmentation de la conductivité de la solution, au contraire, elle diminue. C'est la signature de la condensation des biopolymères anioniques (M-) et cationiques (M+) à la surface des particules, conduisant à la diminution de la conductivité globale de la solution. Compte tenu du fait que les grosses particules de lipides contribuent peu à la conductivité, et que les sels en solution (agent osmotique) peuvent être piégés dans l'interface au cours de la condensation, ils ne contribuent plus à la conductivité de la solution.

Les aliments et les compléments alimentaires 10 qui constituent certains des produits de l'invention sont donc des produits à architecture modulaire qui permettent d'encapsuler des nutriments et substances actives diverses et de les relarguer dans le système digestif des animaux cibles.

La stabilisation grâce aux polymères M+ et M- de l'enrobage 14 lui permet de résister au milieu acide de l'estomac tout en permettant une désagrégation rapide en milieu basique ultérieur ce qui assure un relargage très rapide et efficace de l'ensemble des nutriments et substances actives là où ils sont les plus efficaces.

L'architecture modulaire du noyau 12 permet d'incorporer dans la phase interne aqueuse 18 de l'ordre de vingt substances actives hydrosolubles différentes ; dans la phase interne lipidique L, on peut incorporer aussi un nombre important de substances actives liposolubles différentes.

Le procédé de fabrication est respectueux de ces nutriments et substances actives.

Les produits objets de l'invention sont ainsi avec leur architecture modulaire d'usage très souple et en faisant varier les conditions de fabrication, on peut faire varier les dimensions respectives des particules et des noyaux ainsi que la nature et la quantité des substances actives et des nutriments pour les adapter finement à tous les animaux cibles.

La stabilité des produits objets de l'invention est analysée par la méthode Dumas des protéines relarguées dans le surnageant de préparation des particules d'aliment.

### Principes de la méthode :

La combustion est une méthode rapide de détermination de la composition élémentaire de composés organiques, c'est la méthode Dumas. Elle est utilisée en particulier pour déterminer les quantités d'azote et de carbone présents dans des matières organiques, et lorsque l'on dose le Diazote obtenu dans les appareillages tels que le modèle Leco série FP828p utilisé dans l'expérimentation, on peut la corréler à la quantité de protéines pour des ingrédients d'origine animale ou végétale.

Lors de la combustion, l'utilisation d'oxygène pur induit l'oxydation totale de la matière organique, et l'équation suivante peut s'écrire pour la réaction de combustion d'échantillons organiques (équation 1) :

(CₓH_{y}N_{z}) (s/l) + O₂(g) -----> x CO₂ (g) + y H₂O (g) + z NO₂ (g) (1).

Le carbone et l'hydrogène des échantillons solides ou liquides (CxHyNz) sont entièrement transformés dans les produits correspondants, à savoir dioxyde de carbone CO₂ et eau H₂O, l'azote est oxydé pour former du NO₂.

L'échantillon solide ou liquide enveloppé dans une feuille d'étain est brûlé dans le réacteur de combustion dans le courant d'oxygène pur et les cendres formées sont recueillies dans le piège à cendres. Grâce à deux catalyseurs, les produits gazeux de la combustion réagissent complètement pour former les oxydes désirés. Les oxydes d'azote sont ensuite réduits en azote élémentaire, tandis que les deux autres produits, l'eau et le dioxyde de carbone, sont séparés en tant que sous-produits dans des séparateurs spéciaux. Dans le flux gazeux restant, composé d'hélium (gaz vecteur inerte) et d'azote, l'azote peut ensuite être mesuré avec un détecteur de conductivité thermique.

Les fabricants d'analyseurs proposent un facteur de conversion de 6,38 entre le dosage de N₂ et la quantité de protéines présents dans l'échantillon. Ce facteur est retenu pour la détermination de la quantité de protéines dosées dans les eaux de lixiviation des aliments.

### Conditions expérimentales :

Les échantillons de noyaux ont été préparés avec la même composition interne de protéines (55% massique de l'aliment est de la protéine), sur la base de la composition en protéines des ingrédients entrant dans la composition de la formulation du noyau. 50g de noyaux 12 selon l'invention ont été préparés et dispersés avec une taille de 150 microns, pour être ensuite enrobés ou non avec un enrobage 14 selon l'invention. La solution obtenue est ensuite stockée dans une solution à l'équilibre osmotique avec les particules obtenus (noyaux seuls ou noyaux + enrobages), pour limiter le risque de pompage osmotique entre l'intérieur des particules et l'extérieur, par dissolution de 1% massique de sorbitol, et 41g/L de sel (NaCl) dans l'eau de la phase continue.

La quantité de protéines totales relarguées dans le surnageant de dispersion des particules (noyaux seuls ou noyaux + enrobages), est déterminée afin d'évaluer l'efficacité de l'encapsulation des protéines dans les particules.

Pour accentuer l'effet de lixiviations plusieurs dilutions des particules (noyaux seuls ou noyaux + enrobages) dans la solution de sorbitol et de sel ont été testés, ainsi que la stabilité des échantillons encapsulés après deux jours de stockage des dispersions de particules.

Tous les essais ont été réalisés 3 fois, et les écart types représentés graphiquement, traduisent la variabilité expérimentale, avec un facteur de correction de 1,638 extrait des tables de Student pour un intervalle de confiance de 90%.

### Résultats et conclusions :

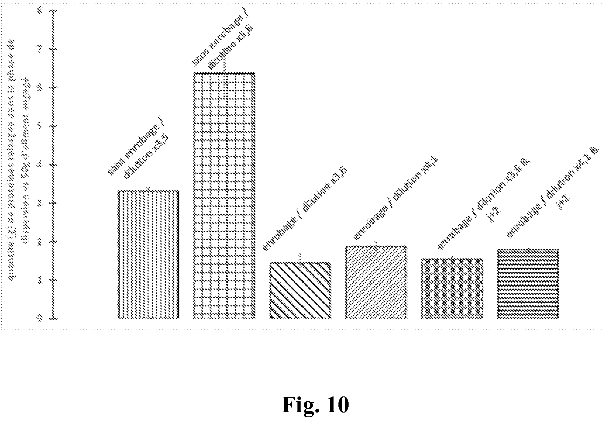

La figure 10 montre les résultats obtenus pour les produits suivants :
- Produit sans enrobage et facteur de dilution x3.5 ;
- Produit sans enrobage et facteur de dilution x5.6 ;
- Produit avec enrobage et facteur de dilution x3.6 ;
- Produit avec enrobage et facteur de dilution x4.1 ;
- Produit avec enrobage et facteur de dilution x3.6 après 2 jours de stockage ; et
- Produit avec enrobage et facteur de dilution x4.1 après 2 jours de stockage.

Les histogrammes ci-dessus démontrent que les particules sans enrobage perdent une quantité importante de protéines (3,2g pour 50g d'aliment dilué 3,5x), ce qui est accentué (6,5g pour 50g d'aliment) par le facteur de dilution (5,6x) des particules, malgré la stratégie d'équilibration des pressions osmotiques des particules d'aliment avec le sel et le sorbitol.

Pour les particules ayant été protégées par un enrobage de coacervats, et une charge minérale (bentonite exfoliée), la quantité de protéines mesurée dans le surnageant est deux fois plus faible (1,6g pour 50g d'aliment). De plus les particules d'aliment restent stables avec une augmentation du facteur de dilution (1,8g de protéines pour 50g d'aliment), et surtout n'évolue pas après deux jours de stockage (< à 2g de protéines pour 50g d'aliment).

## Revendications

1. Aliment ou complément alimentaire permettant une libération contrôlée de substances nutritives et/ou physiologiquement actives pour animaux, comprenant un noyau (12) avec une phase lipidique L comportant des substances nutritives et/ou physiologiquement actives liposolubles, ladite phase lipidique L étant sous forme de particules (16) dispersées dans une matrice aqueuse (18) gélifiée, **caractérisé en ce que** :
- ladite phase aqueuse (18) gélifiée comporte des substances nutritives et/ou physiologiquement actives hydrosolubles,
- ladite phase aqueuse (18) gélifiée comporte une charge minérale exfoliée de surface spécifique supérieure à 100 m²/g,
- l'interface entre les particules lipidiques (16) et la matrice aqueuse (18) comporte des agents de surface choisis dans le groupe des microparticules minérales, des nanoparticules minérales, des microfibres organiques, des nanofibres organiques et leurs combinaisons, et
- l'aliment ou complément alimentaire comporte un enrobage (14) du noyau (12).

2. Aliment ou complément alimentaire selon la revendication 1, dans lequel la phase aqueuse (18) gélifiée comprend au moins un agent de gélification choisi parmi les cations multivalents.

3. Aliment ou complément alimentaire selon l'une quelconque des revendications 1 et 2, dans lequel ladite phase aqueuse (18) comporte un polysaccharide neutre ou fonctionnalisé avec au moins une fonction choisie parmi les fonctions carboxylique, sulfonate, alcoolate ou phosphate, et de préférence la fonction carboxylique, avec une teneur comprise entre 1 et 8 % en poids, et de préférence entre 1 et 5,5 % en poids par rapport au poids d'un extrait sec de ladite phase aqueuse (18).

4. Aliment ou complément alimentaire selon la revendication 3, dans lequel ladite phase aqueuse (18) est gélifiée par réaction dudit polysaccharide neutre ou fonctionnalisé avec lesdits cations multivalents en présence de pyrophosphate ou deltagluconolactone, par libération de protons acides par hydrolyse aqueuse.

5. Aliment ou complément alimentaire selon la revendication 4, dans lequel les cations multivalents sont choisis dans le groupe des cations calcium, magnésium, zinc, manganèse, fer, aluminium et leurs combinaisons.

6. Aliment ou complément alimentaire selon l'une quelconque des revendications 4 et 5, dans lequel le cation multivalent est un sel de calcium choisi dans le groupe des carbonate, sulfate, lactate, citrate, tartrate, caséinate et stéarate.

7. Aliment ou complément alimentaire selon l'une quelconque des revendications précédentes, dans lequel ladite charge minérale exfoliée est un phyllosilicate et préférentiellement une smectite.

8. Aliment ou complément alimentaire selon l'une quelconque des revendications précédentes, dans lequel lesdits agents de surface sont des microfibres ou des nanofibres de cellulose ou de chitine.

9. Aliment ou complément alimentaire selon l'une quelconque des revendications précédentes, dans lequel lesdits agents de surface ont une teneur comprise entre 0,1 et 4 % en poids et préférentiellement entre 0,3 et 2 % en poids par rapport au poids des particules lipidiques (16).

10. Aliment ou complément alimentaire selon l'une quelconque des revendications précédentes, dans lequel le noyau (12) comporte en surface des charges libres, et dans lequel l'enrobage (14) du noyau (12) comporte n couches C de matériaux biocompatibles avec un empilement alterné de charges électrostatiques positives et négatives qui forment des coacervats réticulés et structurés en empilement de couches, n étant au moins égal à 2 et les n couches C comprenant au moins une couche C+ comprenant un matériau biocompatible M+ à charges électrostatiques positives et un agent de réticulation R- choisi parmi les anions multichargés, et au moins une couche C- comprenant un matériau biocompatible M- à charges électrostatiques négatives et un agent de réticulation R+ choisi parmi les cations multivalents..

11. Aliment ou complément alimentaire selon l'une quelconque des revendications précédentes, dans lequel le noyau (12) comporte un polymère chargé, ou des protéines avec des charges de surface ou des tensioactifs cationiques, anioniques ou zwitterioniques.

12. Aliment ou complément alimentaire selon l'une quelconque des revendications précédentes, dans lequel la taille dudit aliment ou complément alimentaire est inférieure à 1 mm et de préférence comprise entre 10 et 600 micromètres.

13. Aliment ou complément alimentaire selon l'une quelconque des revendications précédentes, dans lequel la taille desdites particules lipidiques (16) est comprise entre 1 et 100 micromètres et de préférence comprise entre 1 et 20 micromètres.

14. Procédé de préparation d'un aliment ou d'un complément alimentaire selon l'une quelconque des revendications précédentes, comportant les étapes suivantes :
(a) préparer une première émulsion huile dans eau stabilisée par des nanoparticules ou des microparticules pour obtenir lesdites particules lipidiques (16);
(b) préparer une phase aqueuse comportant les substances actives hydrosolubles, et les réactifs de gélification, ajouter dans cette phase aqueuse la première émulsion huile dans eau et homogénéiser l'ensemble pour obtenir une phase aqueuse (18) gélifiable comportant une phase lipidique L stabilisée et dispersée ;
(c) ajouter ladite phase aqueuse en cours de gélification dans une phase huileuse et cisailler fortement l'ensemble pour obtenir une deuxième émulsion des particules aqueuses (18) qui finiront de réticuler et de se solidifier dans l'huile ;
(d) séparer les particules aqueuses (18) gélifiées de la phase huileuse pour obtenir les noyaux (12); et
(e) former l'enrobage (14) desdits noyaux (12).

15. Procédé de préparation d'un aliment ou d'un complément alimentaire selon l'une quelconque des revendications 1 à 13, comportant les étapes suivantes :
(a) préparer une première émulsion huile dans eau stabilisée par des nanoparticules ou des microparticules pour obtenir lesdites particules lipidiques (16);
(b) préparer une phase aqueuse comportant les substances actives hydrosolubles, et les réactifs de gélification, ajouter dans cette phase aqueuse la première émulsion huile dans eau et homogénéiser l'ensemble pour obtenir une phase aqueuse (18) gélifiable comportant une phase lipidique L stabilisée et dispersée ;
(b') laisser reposer ladite phase aqueuse pour obtenir une phase aqueuse (18) gélifiée ;
(c') introduire ladite phase aqueuse (18) gélifiée dans un mixeur éventuellement avec un volume d'eau donné comprenant des agents osmotiques, et mixer jusqu'à obtenir des noyaux (12) de taille cible ; et
(e) former l'enrobage (14) desdits noyaux.

## Patentansprüche

1. Futter oder Futterzusatz, das/der eine kontrollierte Freisetzung von Nahrungs- und/oder physiologisch aktiven Substanzen für Tiere erlaubt, umfassend einen Kern (12) mit einer Lipidphase L, die fettlösliche Nahrungs- und/oder physiologisch aktive Substanzen aufweist, wobei die Lipidphase L in Form von Partikeln (16) vorliegt, die in einer gelierten wässrigen Matrix (18) verteilt sind, **dadurch gekennzeichnet, dass**:
- die gelierte wässrige Phase (18) wasserlösliche Nahrungs- und/oder physiologisch aktive Substanzen aufweist,
- die gelierte wässrige Phase (18) einen exfoliierten mineralischen Füllstoff mit einer spezifischen Oberfläche über 100 m²/g aufweist,
- die Schnittstelle zwischen den Lipidpartikeln (16) und der wässrigen Matrix (18) Tenside aufweist, die aus der Gruppe der mineralischen Mikropartikel, der mineralischen Nanopartikel, der organischen Mikrofasern, der organischen Nanofasern und deren Kombinationen ausgewählt sind, und
- das Futter oder der Futterzusatz eine Ummantelung (14) des Kerns (12) aufweist.

2. Futter oder Futterzusatz nach Anspruch 1, wobei die gelierte wässrige Phase (18) mindestens ein Geliermittel umfasst, das aus den mehrwertigen Kationen ausgewählt ist.

3. Futter oder Futterzusatz nach einem der Ansprüche 1 und 2, wobei die wässrige Phase (18) ein neutrales oder mit mindestens einer Funktion funktionalisiertes Polysaccharid aufweist, die aus den Carboxyl-, Sulfonat-, Alcoolat- oder Phosphatfunktionen ausgewählt ist, und vorzugsweise der Carboxylfunktion mit einem Gehalt zwischen 1 und 8 Gew.-% und vorzugsweise zwischen 1 und 5, 5 Gew.-% im Verhältnis zum Gewicht eines Trockenextrakts der wässrigen Phase (18).

4. Futter oder Futterzusatz nach Anspruch 3, wobei die wässrige Phase (18) durch Reaktion des neutralen oder mit den mehrwertigen Kationen funktionalisierten Polysaccarids bei Anwesenheit von Pyrophosphat oder Deltagluconlacton durch Freisetzung von sauren Protonen durch wässrige Hydrolyse geliert wird.

5. Futter oder Futterzusatz nach Anspruch 4, wobei die mehrwertigen Kationen aus der Gruppe der Kalzium-, Magnesium-, Zink-, Mangan-, Eisen-, Aluminiumkationen und deren Kombinationen ausgewählt sind.

6. Futter oder Futterzusatz nach einem der Ansprüche 4 und 5, wobei das mehrwertige Kation ein Calciumsalz ist, das aus der Gruppe der Carbonate, Sulfate, Lactate, Citrate, Tartrate, Caseinate und Stearate ausgewählt ist.

7. Futter oder Futterzusatz nach einem der vorangehenden Ansprüche, wobei der exfoliierte mineralische Füllstoff ein Phyllosilicat und vorzugsweise ein Smectit ist.

8. Futter oder Futterzusatz nach einem der vorangehenden Ansprüche, wobei die Tenside Cellulose- oder Chitin-Mikrofasern oder -Nanofasern sind.

9. Futter oder Futterzusatz nach einem der vorangehenden Ansprüche, wobei die Tenside einen Gehalt zwischen 0,1 und 4 Gew.-% und vorzugsweise zwischen 0,3 und 2 Gew.-% im Verhältnis zum Gewicht der Lipidpartikel (16) haben.

10. Futter oder Futterzusatz nach einem der vorangehenden Ansprüche, wobei der Kern (12) auf der Oberfläche freie Ladungen aufweist, und wobei die Ummantelung (14) des Kerns (12) n C-Schichten biologisch kompatibler Materialien mit einer abwechselnden Stapelung positiver und negativer elektrostatischer Ladungen aufweist, die im Schichtstapel vernetzte und strukturierte Koazervate bilden, wobei n mindestens gleich 2 ist und die n C-Schichten mindestens eine Schicht C+ umfassen, die ein biologisch kompatibles Material M+ mit positiven elektrostatischen Ladungen und ein Vernetzungsmittel R- umfasst, das aus den mehrfach geladenen Anionen ausgewählt ist, und mindestens eine Schicht C-, die ein biologisch kompatibles Material M-mit negativen elektrostatischen Ladungen und ein Vernetzungsmittel R+ umfasst, das aus den mehrwertigen Kationen ausgewählt ist.

11. Futter oder Futterzusatz nach einem der vorangehenden Ansprüche, wobei der Kern (12) ein geladenes Polymer oder Proteine mit Oberflächenladungen oder kationischen, anionischen oder zwitterionischen Tensiden aufweist.

12. Futter oder Futterzusatz nach einem der vorangehenden Ansprüche, wobei die Größe des Futters oder Futterzusatzes kleiner als 1 mm ist und vorzugsweise zwischen 10 und 600 Mikrometer liegt.

13. Futter oder Futterzusatz nach einem der vorangehenden Ansprüche, wobei die Größe der Lipidpartikel (16) zwischen 1 und 100 Mikrometer und vorzugsweise zwischen 1 und 20 Mikrometer liegt.

14. Verfahren zur Herstellung eines Futters oder eines Futterzusatzes nach einem der vorangehenden Ansprüche, das die folgenden Schritte aufweist:
(a) Herstellen einer ersten, durch Nanopartikel oder Mikropartikel stabilisierten Öl-in-Wasser-Emulsion, um die Lipidpartikel (16) zu erhalten;
(b) Herstellen einer wässrigen Phase, die die wasserlöslichen aktiven Substanzen und die Gelierreagenzien aufweist, Hinzufügen zu dieser wässrigen Phase der ersten Öl-in-Wasser-Emulsion und Homogenisieren des Ganzen, um eine gelierbare wässrige Phase (18) zu erhalten, die eine stabilisierte und verteilte Lipidphase L aufweist;
(c) Hinzufügen der in Gelierung begriffenen wässrigen Phase zu einer öligen Phase und starkes Scheren des Ganzen, um eine zweite Emulsion der wässrigen Partikel (18) zu erhalten, die sich letztendlich vernetzen und im Öl verfestigen;
(d) Trennen der gelierten wässrigen Partikel (18) von der öligen Phase, um die Kerne (12) zu erhalten; und
(e) Bilden der Ummantelung (14) der Kerne (12).

15. Verfahren zur Herstellung eines Futters oder eines Futterzusatzes nach einem der Ansprüche 1 bis 13, das die folgenden Schritte aufweist:
(a) Herstellen einer ersten, durch Nanopartikel oder Mikropartikel stabilisierten Öl-in-Wasser-Emulsion, um die Lipidpartikel (16) zu erhalten;
(b) Herstellen einer wässrigen Phase, die die wasserlöslichen aktiven Substanzen und die Gelierreagenzien aufweist, Hinzufügen zu dieser wässrigen Phase der ersten Öl-in-Wasser-Emulsion und Homogenisieren des Ganzen, um eine gelierbare wässrige Phase (18) zu erhalten, die eine stabilisierte und verteilte Lipidphase L aufweist;
(b') Ruhenlassen der wässrigen Phase, um eine gelierte wässrige Phase (18) zu erhalten;
(c') Einleiten der gelierten wässrigen Phase (18) in einen Mixer eventuell mit einem bestimmten Wasservolumen, das osmotische Mittel umfasst, und Mixen bis zum Erhalt der Kerne (12) in Zielgröße; und
(e) Bilden der Ummantelung (14) der Kerne.

## Claims

1. A feed or feed supplement allowing controlled release of nutrients and/or physiologically active substances for animals, comprising a core (12) with a lipid phase L comprising nutrients and/or physiologically active lipid-soluble substances, said lipid phase L being in the form of particles (16) dispersed in a gelled aqueous matrix (18), **characterized in that**:
- said gelled aqueous phase (18) contains water-soluble nutrients and/or physiologically active substances;
- said gelled aqueous phase (18) contains an exfoliated mineral filler with a specific surface area greater than 100 m²/g;
- the interface between the lipid particles (16) and the aqueous matrix (18) comprises surfactants chosen from the group of mineral microparticles, mineral nanoparticles, organic microfibers, organic nanofibers and combinations thereof; and
- the feed or feed supplement comprises a coating (14) of the core (12).

2. The feed or feed supplement according to claim 1, wherein the gelled aqueous phase (18) comprises at least one gelling agent chosen from multivalent cations.

3. The feed or feed supplement according to any one of claims 1 and 2, wherein said aqueous phase (18) comprises a neutral or functionalized polysaccharide with at least one function chosen from carboxylic, sulfonate, alkoxide or phosphate functions, and preferably carboxylic function, with a content comprised between 1 and 8% by weight, and preferably between 1 and 5.5% by weight relative to the weight of a dry extract of said aqueous phase (18).

4. The feed or feed supplement according to claim 3, wherein said aqueous phase (18) is gelled by reaction of said neutral or functionalized polysaccharide with said multivalent cations in the presence of pyrophosphate or glucono-delta-lactone, by release of acid protons by aqueous hydrolysis.

5. The feed or feed supplement according to claim 4, wherein the multivalent cations are chosen from the group of calcium, magnesium, zinc, manganese, iron or aluminium cations and combinations thereof.

6. The feed or feed supplement according to any one of claims 4 and 5, wherein the multivalent cation is a calcium salt chosen from the group of carbonate, sulphate, lactate, citrate, tartrate, caseinate and stearate.

7. The feed or feed supplement according to any one of the preceding claims, wherein said exfoliated mineral filler is a phyllosilicate and preferably a smectite.

8. The feed or feed supplement according to any one of the preceding claims, wherein said surfactants are microfibers or nanofibers of cellulose or chitin.

9. The feed or feed supplement according to any one of the preceding claims, wherein said surfactants have a content comprised between 0.1 and 4% by weight and preferably between 0.3 and 2% by weight relative to the weight lipid particles (16).

10. The feed or feed supplement according to any one of the preceding claims, wherein the core (12) comprises free charges on the surface, and wherein the coating (14) of the core (12) comprises n layers C of biocompatible materials with an alternating stack of positive and negative electrostatic charges which form crosslinked coacervates structured in a stack of layers, n being at least equal to 2 and the n layers C comprising at least one layer C+ comprising a biocompatible material M+ with positive electrostatic charges and a crosslinking agent R- chosen from multicharged anions, and at least one layer C- comprising a biocompatible material M- with negative electrostatic charges and a crosslinking agent R+ chosen from multivalent cations.

11. The feed or feed supplement according to any one of the preceding claims, wherein the core (12) comprises a charged polymer, or proteins with surface charges or cationic, anionic or zwitterionic surfactants.

12. The feed or feed supplement according to any one of the preceding claims, wherein the size of said feed or feed supplement is less than 1 mm and preferably comprised between 10 and 600 micrometres.

13. The feed or feed supplement according to any one of the preceding claims, wherein the size of said lipid particles (16) is comprised between 1 and 100 micrometres and preferably comprised between 1 and 20 micrometres.

14. A process for preparing a feed or a feed supplement according to any one of the preceding claims, comprising the following steps:
(a) preparing a first oil-in-water emulsion stabilized by nanoparticles or microparticles to obtain said lipid particles (16) ;
(b) preparing an aqueous phase comprising the water-soluble active substances and the gelling reagents, adding the first oil-in-water emulsion to this aqueous phase and homogenizing the whole to obtain a gellable aqueous phase (18) comprising a stabilized and dispersed lipid phase L;
(c) adding said aqueous phase during gelling into an oily phase and strongly shearing the whole to obtain a second emulsion of aqueous particles (18) which will finish crosslinking and solidifying in the oil;
(d) separating the gelled aqueous particles (18) from the oily phase to obtain the cores (12); and
(e) forming the coating (14) of said cores (12).

15. The process for preparing a feed or a feed supplement according to any one of claims 1 to 13, comprising the following steps:
(a) preparing a first oil-in-water emulsion stabilized by nanoparticles or microparticles to obtain said lipid particles (16);
(b) preparing an aqueous phase comprising the water-soluble active substances and the gelling reagents, adding the first oil-in-water emulsion to this aqueous phase and homogenizing the whole to obtain a gellable aqueous phase (18) comprising a stabilized and dispersed lipid phase L;
(b') letting said aqueous phase rest to obtain a gelled aqueous phase (18);
(c') introducing said gelled aqueous phase (18) into a mixer, optionally with a given volume of water including osmotic agents, and mixing until cores (12) of target size are obtained; and
(e) forming the coating (14) of said cores.
